# FASCICULE DE BREVET EUROPEEN

(11) **EP 3 743 928 B1**
(45) Date de publication et mention de la délivrance du brevet: **29.09.2021**
(21) Numéro de dépôt: 19704854.9
(22) Date de dépôt: 21.01.2019
(51) Int. Cl.: G21F 5/012, G21C 19/07

(54) **PANIER DE RANGEMENT POUR MATIERES RADIOACTIVES, PRESENTANT UN ENCOMBREMENT OPTIMISE AINSI QUE DES LOGEMENTS DE GEOMETRIE PLUS PRECISE**
LAGERKORB FÜR RADIOAKTIVE MATERIALIEN MIT OPTIMIERTEM PLATZBEDARF UND MIT GEHÄUSEN MIT GENAUERER GEOMETRIE
STORAGE BASKET FOR RADIOACTIVE MATERIALS, HAVING AN OPTIMISED SPACE REQUIREMENT AND HOUSINGS WITH MORE ACCURATE GEOMETRY

(30) Priorité: 26.01.2018 FR 1850638
(43) Date de publication de la demande: 02.12.2020
(73) Titulaire: ORANO NUCLEAR PACKAGES AND SERVICES, 78180 Montigny-le-Bretonneux (FR)
(72) Inventeur: DELAGE, Olivier, 78340 LES CLAYES SOUS BOIS (FR)
(74) Mandataire: Brevalex
(86) Numéro de dépôt international: PCT/FR2019/050117
(87) Numéro de publication internationale: WO 2019/145627

(56) Documents cités:
- FR-A1- 2 813 701
- FR-A1- 2 992 092
- US-A1- 2016 372 224

## Description

### DOMAINE TECHNIQUE

La présente invention se rapporte au domaine du transport et/ou de l'entreposage de matières radioactives. Il peut par exemple s'agir d'assemblages de combustible frais ou irradiés, ou de déchets radioactifs.

### ETAT DE LA TECHNIQUE ANTERIEURE

Un panier, également appelé « dispositif » ou « râtelier » de rangement, comprend une pluralité de logements adjacents chacun apte à recevoir des matières radioactives. Il est logé dans l'enceinte de confinement d'un emballage, et conçu afin de pouvoir remplir simultanément trois fonctions essentielles, qui vont être brièvement exposées ci-dessous.

Il s'agit en effet tout d'abord de la fonction de transfert thermique de la chaleur dégagée par les matières radioactives. Généralement, il est utilisé de l'aluminium ou l'un de ses alliages, en raison de ses bonnes propriétés de conduction thermique.

La seconde fonction concerne l'absorption neutronique, et le souci de maintenir la sous-criticité du panier de rangement lorsque celui-ci est chargé avec les matières radioactives fissiles. Ceci est réalisé en utilisant des matériaux absorbeurs de neutrons dits matériaux neutrophages, tels que le bore.

Enfin, la troisième fonction essentielle est relative à la résistance mécanique du dispositif. Il est noté que la résistance mécanique globale du panier doit être compatible avec les exigences réglementaires de sûreté pour le transport/entreposage de matières radioactives, notamment en ce qui concerne les épreuves dites « de chute libre ».

De nombreuses solutions techniques sont déjà connues pour réaliser de tels paniers. Par exemple, il a été envisagé de prévoir des tubes agencés parallèlement et formant chacun un logement destiné à recevoir des matières radioactives. Dans ce cas de figure, par exemple divulgué dans le document EP 1 212 755 A1, les tubes sont maintenus entre eux par des plaques transversales espacées les unes des autres selon l'axe central longitudinal du panier. Pour ce faire, chacune de ces plaques est traversée par les tubes au niveau d'orifices traversants. Cependant, une épaisseur minimale de matière doit être conservée entre deux orifices traversants directement consécutifs au sein d'une même plaque, afin de satisfaire la fonction de résistance mécanique précitée. Cela génère un encombrement transversal conséquent pour le panier.

Par ailleurs, les tubes s'étendent généralement sur toute la hauteur du panier. Cela rend difficile l'obtention d'une géométrie précise du logement, sur toute la longueur de ce dernier. Il est particulièrement compliqué et coûteux d'aboutir à la rectitude souhaitée sur toute la longueur du logement.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un panier de rangement pour matières radioactives, le panier étant destiné à être agencé dans une enceinte de confinement d'un emballage pour le transport et/ou l'entreposage des matières radioactives, le panier définissant une pluralité de logements chacun destiné à recevoir des matières radioactives, les logements étant parallèles entre eux et s'étendant chacun selon un axe de logement parallèle à un axe central longitudinal du panier, ce dernier comportant :
- une plaque transversale ou une pluralité de plaques transversales réparties le long de l'axe central longitudinal du panier et agencées orthogonalement à cet axe, chaque plaque étant traversée par une pluralité d'orifices ;
- une pluralité de tubes de logement agencés parallèlement à l'axe central longitudinal du panier.

Selon l'invention, les tubes de logement sont agencés en alternance avec la/les plaques transversales selon l'axe central longitudinal, de façon à ce que la surface latérale interne de chaque logement soit définie au moins par, successivement selon cet axe, la surface interne d'un premier tube de logement, la surface interne de l'un des orifices d'une première plaque transversale, et la surface interne d'un second tube de logement.

Grâce à cette conception segmentée des logements selon la direction longitudinale du panier, il devient plus aisé d'obtenir la rectitude souhaitée sur toute la longueur de ces logements. Par ailleurs, puisque les orifices des plaques transversales forment à présent partie intégrante des logements, ces orifices peuvent ainsi être rapprochés les uns des autres tout en conservant l'épaisseur minimale de matière requise pour satisfaire la fonction de résistance mécanique. L'encombrement transversal du panier s'en trouve avantageusement diminué.

L'invention présente par ailleurs au moins l'une quelconque des caractéristiques optionnelles suivantes, prises isolément ou en combinaison.

La/les plaques transversales comprennent chacune, au niveau de leurs deux faces opposées, des moyens de maintien des tubes de logement.

Ces moyens de maintien prennent de préférence la forme d'empreintes dans lesquelles sont insérées les extrémités de tubes de logement.

La surface latérale interne de chaque logement présente une section de forme circulaire, carrée, rectangulaire ou hexagonale, ou de toute autre forme réputée appropriée par l'homme du métier.

La/les plaques transversales présentent chacune une forme de disque.

Chaque tube de logement est réalisé dans un acier de préférence dépourvu d'éléments absorbeurs de neutrons, et chaque tube de logement forme un tube intérieur entouré par un tube extérieur réalisé dans un alliage d'aluminium comprenant de préférence des éléments absorbeurs de neutrons comme du bore.

Chaque tube intérieur fait saillie axialement au niveau de chacune des deux extrémités opposées du tube extérieur.

La/les plaques transversales sont réalisées en acier.

Le panier comporte également une plaque de tête et une plaque de fond enserrant entre elles l'alternance de plaque(s) transversale(s) et de tubes de logement.

Le panier comporte également des tirants traversant chacun la plaque de tête, la plaque de fond, ainsi que la/les plaques transversales.

Chaque logement est défini à l'aide d'un nombre N de plaque(s) transversale(s), le nombre N étant compris entre 1 et 20.

Un rapport entre la longueur de l'un quelconque des tubes de logement et l'épaisseur de la plaque ou de l'une quelconque des plaques transversales est compris entre 3 et 15.

La longueur des tubes de logement est comprise entre 20 et 70 cm.

Enfin, l'invention a pour objet un emballage pour le transport et/ou l'entreposage de matières radioactives, l'emballage comprenant une cavité de confinement délimitée par un corps latéral, un fond et un couvercle, l'emballage étant équipé d'un panier de rangement tel que décrit ci-dessus, agencé dans l'enceinte de confinement.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- La figure 1 représente un emballage pour le transport et/ou l'entreposage de matières radioactives, en perspective éclatée, selon un mode de réalisation préférée de l'invention ;
- La figure 2 représente une vue en coupe transversale du panier de rangement équipant l'emballage de la figure 1, selon un plan de coupe P de cette même figure ; et
- La figure 3 représente une vue en coupe prise selon la ligne III-III de la figure 2.

### EXPOSÉ DÉTAILLÉ DE MODES DE RÉALISATION PRÉFÉRÉS

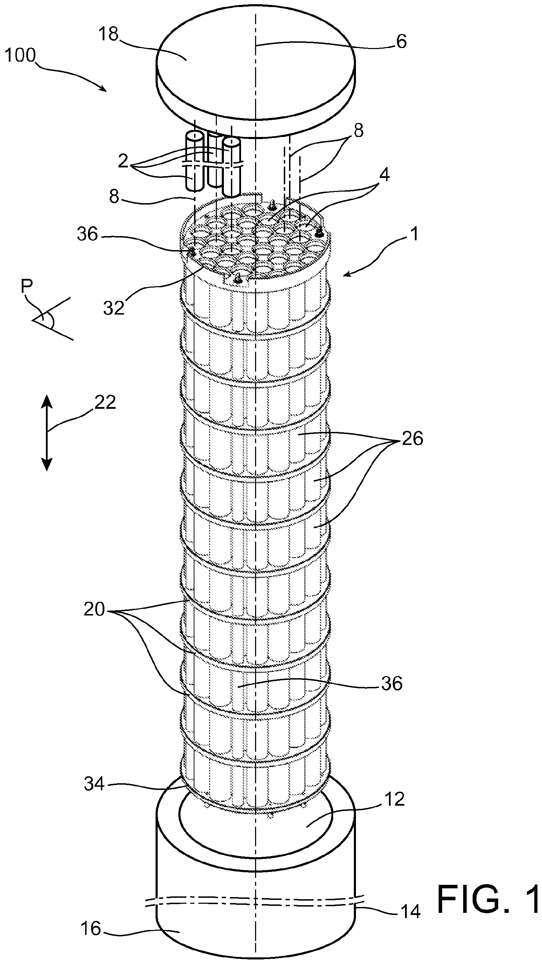

En référence tout d'abord à la figure 1, il est représenté un emballage 100 pour le transport et/ou l'entreposage de matières radioactives selon un mode de réalisation préféré de l'invention. Cet emballage 100 comporte un panier de rangement 1 dans lequel les matières radioactives 2 sont destinées à être stockées, dans des logements 4 adjacents et parallèles à un axe central longitudinal 6 du panier. Aussi, chaque logement 4 présente un axe de logement 8 parallèle à l'axe central 6 du panier 1, correspondant à l'axe central longitudinal de l'emballage.

L'emballage 100 définit une enceinte de confinement 12 dans laquelle le panier 1 est destiné à être logé. De façon classique, l'emballage est formé par un corps latéral extérieur 14, un fond fixe 16 et un couvercle amovible 18 fermant l'enceinte 12. Lorsque le panier de l'emballage est chargé de matières radioactives 2, l'ensemble est classiquement dénommé « colis ».

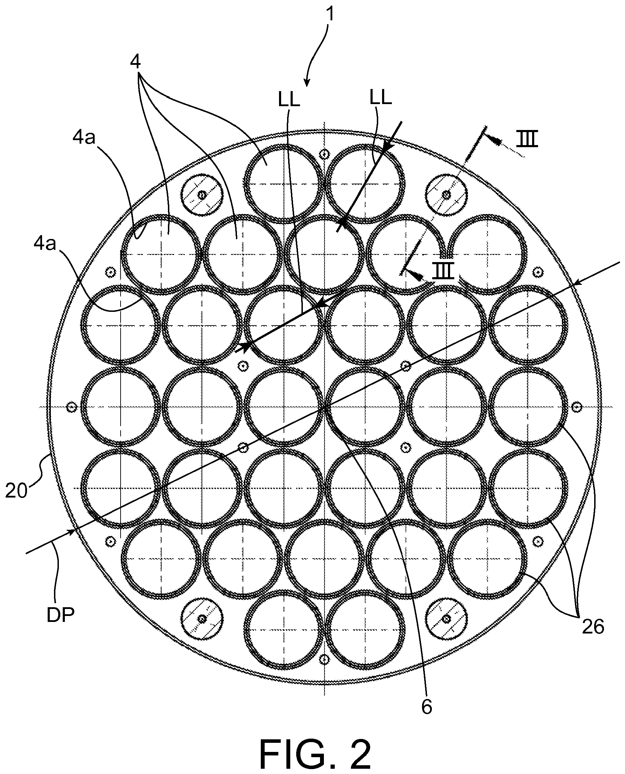

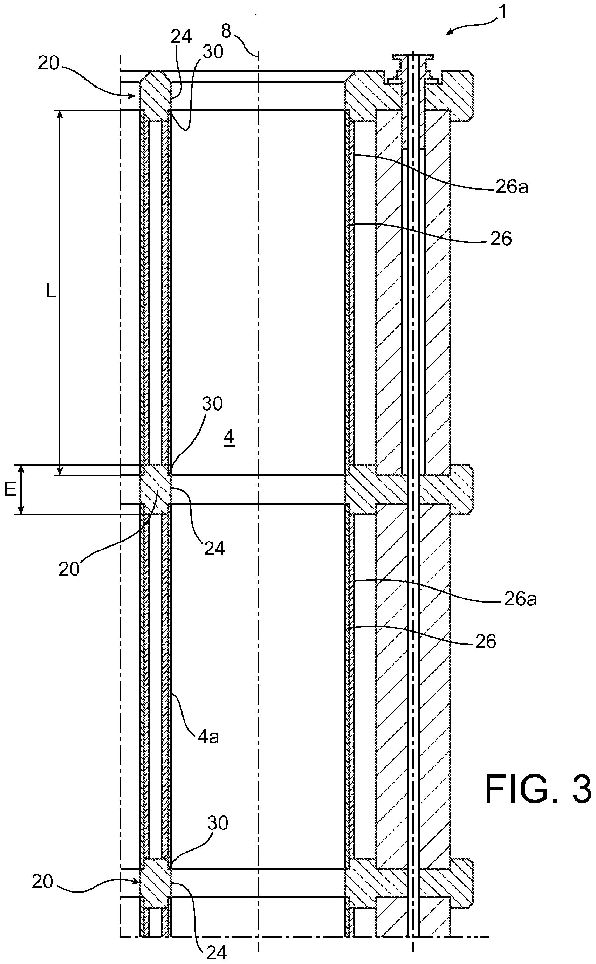

Le panier de rangement 1 présente une forme générale cylindrique d'axe 6, et de section circulaire complémentaire de celle de l'enceinte 12. Les logements 4 présentent également une forme cylindrique de section préférentiellement circulaire, mais qui pourrait alternativement être carrée, rectangulaire ou encore hexagonale, afin de s'adapter à la forme des contenus radioactifs reçus dans les logements 4. La forme précitée des logements correspond à leurs surfaces internes 4a, référencée sur les figures 2 et 3.

A titre indicatif, il est noté que le nombre de logements 4 prévus sur le panier 1 est élevé, par exemple supérieur à 10. Dans l'exemple représenté sur les figures, ce sont 32 logements qui sont définis par le panier 1, chacun de ces logements recevant des matières radioactives 2 comme des assemblages de combustible frais ou irradiés, ou de déchets radioactifs.

La plus grande largeur de chaque logement, référencée « LL » sur la figure 2 et correspondant au diamètre intérieur de chacun de ces logements, est telle qu'elle présente une grandeur faible au regard du diamètre extérieur du panier référencé « DP ». Plus précisément, le rapport entre les dimensions LL et DP est inférieur ou égal à 0,2, ce qui traduit en effet la présence d'un nombre élevé de logements 4 au sein du panier.

Le panier 1 est réalisé à l'aide d'éléments divers, parmi lesquels au moins une plaque transversale 20, et de préférence plusieurs plaques transversales 20 espacées les unes des autres selon une direction longitudinale 22 du panier, parallèle à son axe central longitudinal 6. Ces plaques transversales 20, également dénommées galettes, sont ainsi orientées transversalement au sein du panier, c'est-à-dire agencées orthogonalement au plan P et aux axes 6, 8. Elles sont de préférence réalisées en acier, et présentent chacune une forme générale de disque percé d'une pluralité d'orifices 24, dont le nombre correspond au nombre total de logements 4 au sein du panier.

Entre les plaques 20, le panier 1 comporte des tubes de logement 26 agencés parallèlement à l'axe central longitudinal 6 du panier. Tout comme les plaques 20, les tubes 26 de section circulaire sont réalisés dans un acier, de préférence dépourvu d'éléments absorbeurs de neutrons, comme un acier inoxydable. A cet égard, il est indiqué que par « éléments absorbeurs de neutrons », il est entendu des éléments qui présentent une section efficace supérieure à 100 barns pour les neutrons thermiques. Cependant, dans le mode de réalisation représenté, chaque tube de logement 26 forme un tube intérieur entouré par un tube extérieur 26a réalisé quant à lui dans matériau comprenant des éléments absorbeurs de neutrons, comme un alliage d'aluminium comprenant du bore, gadolinium, hafnium, cadmium, ou encore indium. Un jeu radial très faible est prévu entre les deux tubes coaxiaux 26, 26a de chaque couple, seul un jeu d'assemblage pouvant en effet être conservé.

Plus précisément, deux tubes 26 sont associés à chaque orifice 24 de chaque plaque transversale 20, en étant disposés de part et d'autre de l'orifice concerné. L'une des particularités de l'invention réside en effet dans la formation des logements 4 par l'association des tubes de logement 26, et des orifices 24 traversant les plaques 20. Puisque les plaques transversales 20 et les tubes de logement 26 sont agencés en alternance selon la direction 22, la surface latérale interne 4a de chaque logement 4 est ainsi définie successivement par la surface interne d'un premier tube de logement 26, la surface interne de l'un des orifices d'une première plaque transversale 20, et la surface interne d'un second tube de logement 26, la surface interne de l'un des orifices d'une seconde plaque transversale 20, et ainsi de suite. Il est noté que le nombre de plaques transversales est compris entre 1 et 20, et préférentiellement entre 5 et 15. Bien évidemment, ce nombre dépend de la hauteur du panier. Les tubes 26 sont alors prévus dans un nombre analogue, en présentant une longueur de l'ordre de 20 à 70 cm. Cette longueur « L» schématisée sur la figure 3 est plus importante que l'épaisseur « E » des plaques 20, puisque le rapport entre la longueur L de l'un quelconque des tubes de logement 26, et l'épaisseur E de l'une quelconque des plaques transversales 20, est compris entre 3 et 15. L'épaisseur E de la plaque 20 est ici considérée dans sa zone courante entre les orifices 24, à distance de la périphérie de ces derniers qui présente un évidement conduisant à une réduction locale de l'épaisseur.

Cet évidement forme une empreinte 30 que sert de moyens de maintien du tube de logement 26, dont une extrémité est insérée dans cette empreinte. La surface extérieure du tube 26 est en effet guidée par la paroi latérale de l'empreinte 30, tandis que le fond de celle-ci forme un épaulement sur lequel le tube 26 vient en butée axiale. Chaque orifice 24 est ainsi équipé de deux empreintes 30 respectivement prévues sur les deux faces opposées de la plaque transversale associée 20, afin de maintenir les deux tubes 26 correspondants.

De préférence, seul le tube de logement 26 en acier pénètre dans l'empreinte 30, et non le tube extérieur associé 26a. Pour ce faire, chaque tube 26 fait saillie axialement au niveau de chacune des deux extrémités opposées du tube extérieur 26a, ces extrémités reposant quant à elles sur la partie courante de la plaque 20, d'épaisseur E.

Enfin, il est noté que le panier 1 comprend également une plaque de tête 32 et une plaque de fond 34, enserrant entre elles l'alternance de plaques transversales 20 et de tubes de logement 26. Ces plaques 32, 34 présentent également des orifices pour le passage des matières radioactives. Elles sont reliées entre elles par des tirants 36 qui les traversent, et qui traversent également chaque plaque transversale 20 au niveau de la périphérie du panier.

Grâce à cette conception, la fonction mécanique est assurée conjointement par les tubes 26, les plaques 20 et les tirants 36, tandis que la fonction de sous-criticité est assurée par les tubes extérieurs 26a.

De plus, la conception segmentée des logements 4 selon la direction longitudinale 22 permet d'obtenir la rectitude souhaitée, sur toute leur longueur. Et puisque les orifices 24 des plaques 20 font partie intégrante des logements, ces orifices peuvent être rapprochés les uns des autres tout en conservant entre eux une épaisseur minimale de matière afin de remplir la fonction de résistance mécanique. L'encombrement transversal du panier 1 s'en trouve avantageusement diminué.

Bien entendu, diverses modifications peuvent être apportées par l'homme du métier au panier de rangement 1 et à l'emballage 100 qui viennent d'être décrits, uniquement à titre d'exemples indicatifs et dans la limite de la portée définie par les revendications annexées.

## Revendications

1. Panier de rangement (1) pour matières radioactives (2), le panier étant destiné à être agencé dans une enceinte de confinement (12) d'un emballage (100) pour le transport et/ou l'entreposage des matières radioactives, le panier définissant une pluralité de logements (4) chacun destiné à recevoir des matières radioactives (2), les logements étant parallèles entre eux et s'étendant chacun selon un axe de logement (8) parallèle à un axe central longitudinal (6) du panier, ce dernier comportant :
- une plaque transversale ou une pluralité de plaques transversales (20) réparties le long de l'axe central longitudinal (6) du panier et agencées orthogonalement à cet axe, chaque plaque (20) étant traversée par une pluralité d'orifices (24) ;
- une pluralité de tubes de logement (26) agencés parallèlement à l'axe central longitudinal (6) du panier,
**caractérisé en ce que** les tubes de logement (26) sont agencés en alternance avec la/les plaques transversales (20) selon l'axe central longitudinal (6), de façon à ce que la surface latérale interne (4a) de chaque logement (4) soit définie au moins par, successivement selon cet axe (6), la surface interne d'un premier tube de logement (26), la surface interne de l'un des orifices (24) d'une première plaque transversale (20), et la surface interne d'un second tube de logement (26).

2. Panier selon la revendication 1, **caractérisé en ce que** la/les plaques transversales (20) comprennent chacune, au niveau de leurs deux faces opposées, des moyens de maintien (30) des tubes de logement (26).

3. Panier selon la revendication précédente, **caractérisé en ce que** les moyens de maintien prennent la forme d'empreintes (30) dans lesquelles sont insérées les extrémités de tubes de logement (26).

4. Panier selon l'une quelconque des revendications précédentes, **caractérisé en ce que** la surface latérale interne (4a) de chaque logement (4) présente une section de forme circulaire, carrée, rectangulaire ou hexagonale.

5. Panier selon l'une quelconque des revendications précédentes, **caractérisé en ce que** la/les plaques transversales (20) présentent chacune une forme de disque.

6. Panier selon l'une quelconque des revendications précédentes, **caractérisé en ce que** chaque tube de logement (26) est réalisé dans un acier de préférence dépourvu d'éléments absorbeurs de neutrons, et **en ce que** chaque tube de logement (26) forme un tube intérieur entouré par un tube extérieur (26a) réalisé dans un alliage d'aluminium comprenant de préférence des éléments absorbeurs de neutrons comme du bore.

7. Panier selon la revendication précédente, **caractérisé en ce que** chaque tube intérieur (26) fait saillie axialement au niveau de chacune des deux extrémités opposées du tube extérieur (26a).

8. panier selon l'une quelconque des revendications précédentes, **caractérisé en ce que** la/les plaques transversales (20) sont réalisées en acier.

9. Panier selon l'une quelconque des revendications précédentes, **caractérisé en ce qu'**il comporte également une plaque de tête (32) et une plaque de fond (34) enserrant entre elles l'alternance de plaque(s) transversale(s) (20) et de tubes de logement (26).

10. Panier selon la revendication précédente, **caractérisé en ce qu'**il comporte également des tirants (36) traversant chacun la plaque de tête (32), la plaque de fond (34), ainsi que la/les plaques transversales (20).

11. Panier selon l'une quelconque des revendications précédentes, **caractérisé en ce que** chaque logement (4) est défini à l'aide d'un nombre N de plaque(s) transversale(s) (20), le nombre N étant compris entre 1 et 20.

12. Panier selon l'une quelconque des revendications précédentes, **caractérisé en ce qu'**un rapport entre la longueur (L) de l'un quelconque des tubes de logement (26) et l'épaisseur (E) de la plaque ou de l'une quelconque des plaques transversales (20) est compris entre 3 et 15.

13. Panier selon l'une quelconque des revendications précédentes, **caractérisé en ce que** la longueur des tubes de logement (26) est comprise entre 20 et 70 cm.

14. Emballage (100) pour le transport et/ou l'entreposage de matières radioactives, l'emballage comprenant une enceinte de confinement (12) délimitée par un corps latéral (14), un fond (16) et un couvercle (18), l'emballage étant équipé d'un panier de rangement (1) selon l'une quelconque des revendications précédentes, agencé dans l'enceinte de confinement (12).

## Patentansprüche

1. Lagerkorb (1) für radioaktive Materialien (2), wobei der Korb dazu bestimmt ist, in einem Sicherheitsbehälter (12) einer Verpackung (100) für den Transport und/oder die Zwischenlagerung von radioaktiven Materialien angeordnet zu werden, wobei der Korb eine Mehrzahl von Aufnahmen (4) begrenzt, die jeweils dazu bestimmt sind, radioaktive Materialien (2) aufzunehmen, wobei die Aufnahmen parallel zueinander sind und sich jeweils entlang einer Aufnahmeachse (8) parallel zu einer zentralen Längsachse (6) des Korbs erstrecken, wobei letzterer umfasst:
- eine Querplatte oder eine Mehrzahl von Querplatten (20), die entlang der zentralen Längsachse (6) des Korbes verteilt und orthogonal zu dieser Achse angeordnet sind, wobei jede Platte (20) von einer Mehrzahl von Öffnungen (24) durchquert wird;
- eine Mehrzahl von Aufnahmerohren (26), die parallel zur zentralen Längsachse (6) des Korbes angeordnet sind,
**dadurch gekennzeichnet, dass** die Aufnahmerohre (26) abwechselnd mit der (den) Querplatte(n) (20) entlang der zentralen Längsachse (6) angeordnet sind, so dass die innere Seitenfläche (4a) jeder Aufnahme (4) wenigstens nacheinander entlang dieser Achse (6) durch die Innenfläche eines ersten Aufnahmerohrs (26), die Innenfläche einer der Öffnungen (24) einer ersten Querplatte (20) und die Innenfläche eines zweiten Aufnahmerohrs (26) begrenzt ist.

2. Korb nach Anspruch 1, **dadurch gekennzeichnet, dass** die Querplatte(n) (20) jeweils an ihren beiden gegenüberliegenden Seiten Mittel (30) zum Halten der Aufnahmerohre (26) aufweisen.

3. Korb nach dem vorhergehenden Anspruch, **dadurch gekennzeichnet, dass** die Haltemittel als Vertiefungen (30) ausgebildet sind, in die die Enden von Aufnahmerohren (26) eingesetzt sind.

4. Korb nach einem der vorhergehenden Ansprüche, **dadurch gekennzeichnet, dass** die innere Seitenfläche (4a) jeder Aufnahme (4) einen kreisförmigen, quadratischen, rechteckigen oder sechseckigen Querschnitt aufweist.

5. Korb nach einem der vorhergehenden Ansprüche, **dadurch gekennzeichnet, dass** die Querplatte(n) (20) jeweils eine Scheibenform aufweisen.

6. Korb nach einem der vorhergehenden Ansprüche, **dadurch gekennzeichnet, dass** jedes Aufnahmerohr (26) aus einem Stahl besteht, der vorzugsweise frei von neutronenabsorbierenden Elementen ist, und dass jedes Aufnahmerohr (26) ein Innenrohr bildet, das von einem Außenrohr (26a) aus einer Aluminiumlegierung umgeben ist, die vorzugsweise neutronenabsorbierende Elemente wie Bor umfasst.

7. Korb nach dem vorhergehenden Anspruch, **dadurch gekennzeichnet, dass** jedes Innenrohr (26) an jedem der beiden gegenüberliegenden Enden des Außenrohrs (26a) axial vorsteht.

8. Korb nach einem der vorhergehenden Ansprüche, **dadurch gekennzeichnet, dass** die Querplatte(n) (20) aus Stahl gefertigt ist/sind.

9. Korb nach einem der vorhergehenden Ansprüche, **dadurch gekennzeichnet, dass** dieser auch eine Kopfplatte (32) und eine Bodenplatte (34) umfasst, die dazwischen alternierend eine Querplatte/Querplatten (20) und Aufnahmerohre (26) einschließen.

10. Korb nach dem vorhergehenden Anspruch, **dadurch gekennzeichnet, dass** er außerdem Zugstangen (36) umfasst, die jeweils durch die Kopfplatte (32), die Bodenplatte (34) und die Querplatte(n) (20) verlaufen.

11. Korb nach einem der vorhergehenden Ansprüche, **dadurch gekennzeichnet, dass** jede Aufnahme (4) durch eine Anzahl N von Querplatten (20) begrenzt ist, wobei die Anzahl N zwischen 1 und 20 liegt.

12. Korb nach einem der vorhergehenden Ansprüche, **dadurch gekennzeichnet, dass** ein Verhältnis zwischen der Länge (L) eines der Aufnahmerohre (26) und der Dicke (E) der Querplatte oder einer der Querplatten (20) zwischen 3 und 15 beträgt.

13. Korb nach einem der vorhergehenden Ansprüche, **dadurch gekennzeichnet, dass** die Länge der Aufnahmerohre (26) zwischen 20 und 70 cm beträgt.

14. Verpackung (100) für den Transport und/oder die Zwischenlagerung von radioaktiven Stoffen, wobei die Verpackung einen durch einen Seitenkörper (14), einen Boden (16) und einen Deckel (18) begrenzten Sicherheitsbehälter (12) umfasst, wobei die Verpackung mit einem in dem Sicherheitsbehälter (12) angeordneten Lagerkorb (1) nach einem der vorhergehenden Ansprüche ausgestattet ist.

## Claims

1. A storage basket (1) for radioactive materials (2), the basket being to be arranged into a containment enclosure (12) of a packaging (100) for transporting and/or warehousing radioactive materials, the basket defining a plurality of housings (4) each for receiving radioactive materials (2), the housings being parallel to each other and each extending along a housing axis (8) parallel to a longitudinal central axis (6) of the basket, the latter including:
- a transverse plate or a plurality of transverse plates (20) distributed along the longitudinal central axis (6) of the basket and arranged orthogonally to this axis, each plate (20) having a plurality of holes (24) passing therethrough;
- a plurality of housing tubes (26) arranged parallel to the longitudinal central axis (6) of the basket,
**characterised in that** the housing tubes (26) are arranged alternately with the transverse plate(s) (20) along the longitudinal central axis (6), so that the inner side surface (4a) of each housing (4) is defined, successively along this axis (6), at least by the inner surface of a first housing tube (26), the inner surface of one of the holes (24) of a first transverse plate (20), and the inner surface of a second housing tube (26).

2. The basket according to claim 1, **characterised in that** the transverse plate(s) (20) each comprise, at both their opposite faces, means (30) for holding the housing tubes (26).

3. The basket according to the previous claim, **characterised in that** the holding means take the shape of sockets (30) into which the ends of the housing tubes (26) are inserted.

4. The basket according to any of the previous claims, **characterised in that** the inner side surface (4a) of each housing (4) has a circular, square, rectangular or hexagonal-shaped cross-section.

5. The basket according to any of the previous claims, **characterised in that** the transverse plate(s) (20) each have a disc shape.

6. The basket according to any of the previous claims, **characterised in that** each housing tube (26) is made of a steel preferably devoid of neutron absorbing elements, and **in that** each housing tube (26) forms an internal tube surrounded by an external tube (26a) made of an aluminium alloy preferably comprising neutron absorbing elements such as boron.

7. The basket according to the previous claim, **characterised in that** each internal tube (26) axially projects from each of both opposite ends of the external tube (26a).

8. The basket according to any of the previous claims, **characterised in that** the transverse plate(s) (20) are made of steel.

9. The basket according to any of the previous claims, **characterised in that** it also includes a top plate (32) and a bottom plate (34) sandwiching between each other the alternating transverse plate(s) (20) and housing tubes (26).

10. The basket according to the previous claim, **characterised in that** it also includes tie rods (36) each passing through the top plate (32), the bottom plate (34), as well as the transverse plate(s) (20).

11. The basket according to any of the previous claims, **characterised in that** each housing (4) is defined using a number N of transverse plate(s) (20), number N being between 1 and 20.

12. The basket according to any of the previous claims, **characterised in that** a ratio of the length (L) of any of the housing tubes (26) to the thickness (E) of the plate or of any of the transverse plates (20) is between 3 and 15.

13. The basket according to any of the previous claims, **characterised in that** the length of the housing tubes (26) is between 20 and 70cm.

14. A packaging (100) for transporting and/or warehousing radioactive materials, the packaging comprising a containment enclosure (12) delimited by a side body (14), a bottom (16) and a lid (18), the packaging being fitted with a storage basket (1) according to any of the previous claims, arranged into the containment enclosure (12).
